# EUROPEAN PATENT APPLICATION

(11) **EP 3 009 944 A1**
(43) Date of publication of application: **20.04.2016**
(21) Application number: 15180692.4
(22) Date of filing: 12.08.2015
(51) Int. Cl.: G06F 17/50, G06Q 30/06

(54) **INTEGRATED ACCESS PROVISIONING SOLUTION**

(30) Priority: 08.09.2014 US 201462047578 P; 04.08.2015 US 201514818179
(71) Applicant: Synchronoss Technologies, Inc., Bridgewater, NJ 08807 (US)
(72) Inventor: Yatsko, James, Long Beach Township NJ New Jersey 08008 (US)
(74) Representative: Branderhorst, Matthijs Pieter Arie

(57) **Abstract**

An integrated access provisioning system provides an integrated approach to the ordering, design, provisioning, testing and acceptance of access. The system is designed to assist service providers to streamline the delivery of access services to their customers. Specifically, the system: presents an intuitive front end for ordering access, performs access validation, stores customer circuit inventory to assist in circuit design, provides work flow management with dynamic work queues to support major access delivery functions, supports manual Local Exchange Carrier (LEC) interfaces and provides a reporting engine based on testing.

## Description

### CROSS-REFERENCE TO RELATED APPLICATION(S)

This application claims priority under 35 U.S.C. §119(e) of the U.S. Provisional Patent Application Ser. No. 62/047,578, filed September 8, 2014 and titled, "INTEGRATED ACCESS PROVISIONING SOLUTION" which is also hereby incorporated by reference in its entirety for all purposes.

### FIELD OF THE INVENTION

The present invention relates to the field of the delivery of services. More specifically, the present invention relates to the delivery of ethernet services.

### BACKGROUND OF THE INVENTION

Establishing and configuring network access has been performed manually via several companies exchanging emails and spreadsheets to determine specific details regarding the network access.

Previously, customers would perform functions to deliver access services including Ethernet access services in a non-integrated manner utilizing various standalone systems and processes to perform ordering, price quoting, validation, circuit design, testing/acceptance, as well as managing the flow of work between the various functions. Ethernet service providers are faced with several challenges in delivery of Ethernet services: no ethernet standards, no mechanized ordering interfaces (mostly spreadsheet exchange and conference calls), complexity of product, complexity of circuit design, and a high degree of manual processing.

### SUMMARY OF THE INVENTION

An integrated access provisioning system provides an integrated approach to the ordering, design, provisioning, testing and acceptance of access. The system is designed to assist service providers to streamline the delivery of access services to their customers. Specifically, the system: presents an intuitive front end for ordering access, performs access validation, stores customer circuit inventory to assist in circuit design, provides work flow management with dynamic work queues to support major access delivery functions, supports manual Local Exchange Carrier (LEC) interfaces and provides a reporting engine based on testing.

### BRIEF DESCRIPTION OF THE DRAWINGS

Figure 1 illustrates a diagram of the integrated access provisioning system according to some embodiments.
Figure 2 illustrates a flowchart of a method of implementing the integrated access provisioning system according to some embodiments.
Figure 3 illustrates a block diagram of an exemplary computing device configured to implement the integrated access provisioning system according to some embodiments.
Figure 4 illustrates a network of devices configured to implement the integrated access provisioning system according to some embodiments.

### DETAILED DESCRIPTION OF THE PREFERRED EMBODIMENT

Access provisioning provides users with access to data and technology resources such as providing an access circuit (e.g., Ethernet access).

The integrated access provisioning system described herein incorporates a front end "shopping cart" experience, a price quoting mechanism, as well as integration of work flows and queues through the access ordering, provisioning, design and test/accept process.

The system provides an integrated approach to the ordering, design, provisioning, testing and acceptance of access (e.g., Ethernet). The system is designed to assist service providers to streamline the delivery of access services to their customers. Specifically, the system: presents an intuitive front end for ordering access, performs access validation, stores customer circuit inventory to assist in circuit design, provides work flow management with dynamic work queues to support major access delivery functions, supports manual Local Exchange Carrier (LEC) interfaces and provides a reporting engine. Presenting an intuitive front end for ordering access includes replacing "ASOG speak" with English labels, providing a price quote for the access order and providing a "shopping cart" experience. Performing access validation includes validating a Network Channel Interface (NCI) and secondary NCI codes using industry data. Providing work flow management with dynamic work queues to support major access delivery functions includes ordering, quoting, circuit design, provisioning, testing and accepting. Supporting manual LEC Interfaces includes spreadsheet output and pull in spreadsheet input with LEC status updates. Providing the reporting engine includes fallout reasons / standardized reject codes, operational reporting (intervals, aging, defects), invoicing and sales data quantifying benefits (fallout reduction, interval improvement).

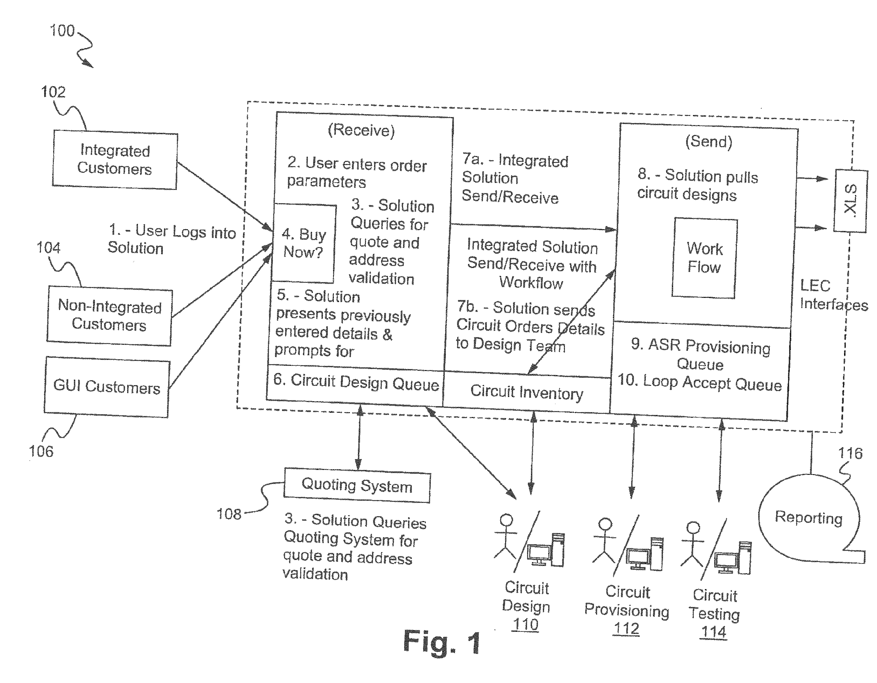

Figure 1 illustrates a diagram of the integrated access provisioning system according to some embodiments. The system 100 includes several types of customers: integrated customers 102, non-integrated customers 104 and GUI customers 106. The customers are able to be any type of customer such as a customer ordering internet access, telephone access or both. The customer is able to log into the system 100 using an interface (e.g., GUI) communicating via an Application Programming Interface (API). The interface provides the customer with a set of English-language (or another language) parameters/information instead of Access Service Ordering Guidelines (ASOG)-speak to enable the user to enter order parameters. For example, instead of asking for LCON, the customer is asked for a "local contact." The system 100 provides real-time feedback based on the user-input such as indicating incorrect input in a field. The system 100 queries for a quote and an address validation. In some embodiments, the system 100 automatically compares the address information provided with a mapping database (or another address validation system) or another database storing information indicating the type of building and current building status (e.g., already has Ethernet) to ensure the address is valid. The query is able to be internal (e.g., using local databases), or the query is able to utilize external data sources (e.g., through the Internet). In some embodiments, the system 100 queries a quoting system 108 for a price quote and address validation. The price quote is able to be generated automatically using a database or any other data structure containing the appropriate information. In addition, data regarding work availability is utilized to determine date/time information (e.g., when the project will be finished). After the validation takes place, the customer is provided with the order information for review including a quote (e.g., price/time frame for delivery and installation). During or after the customer is provided the order information, a "buy now" or similar type of purchase mechanism is implemented to enable the customer to place the order.

After the order is placed, the details are sent for circuit design 110. In some embodiments, circuit design is implemented automatically, and in some embodiments, circuit design is performed manually. For example, a device is able to utilize templates and the received order details to automatically generate a circuit design. Circuit designing is able to be implemented using local circuit inventory information or external information. After the circuit design, the circuit for the design is ordered. In some embodiments, the design and development of the circuit are performed automatically. For example, utilizing robotics or other machinery, a circuit is able to be automatically generated (e.g., the robot is provided a specification of what to design based on the received details and is configured with circuit design software/hardware to design/generate the circuit. In some embodiments, the circuit design order is sent to a queue, and then a design team works on the design. In some embodiments, circuit generation is performed internally or via a third party externally. The communication to the third party could be automated (e.g., an automated interface) or via another form of communication such as spreadsheets. When the circuit is ready (e.g., after it has been generated) and a "ready" communication is sent, it is placed in an Access Service Request (ASR) provisioning queue for provisioning 112. Then, the order/circuit is placed in a loop accept queue so that the circuit is tested using a loop test (or any other test) 114. The test is able to be implemented manually or automatically. The test provides results such as pass/fail as well as feedback to the customer. If any errors are detected, the system 100 sends the test information to the appropriate location/team so that the errors are corrected. For example, if there is a provisioning error, re-provisioning is performed. If there is a design error, the circuit goes back to the design team or the circuit is re-designed using the error information. Reporting 116 is also implemented (e.g., interval, in process aging, defect rate, completion rate).

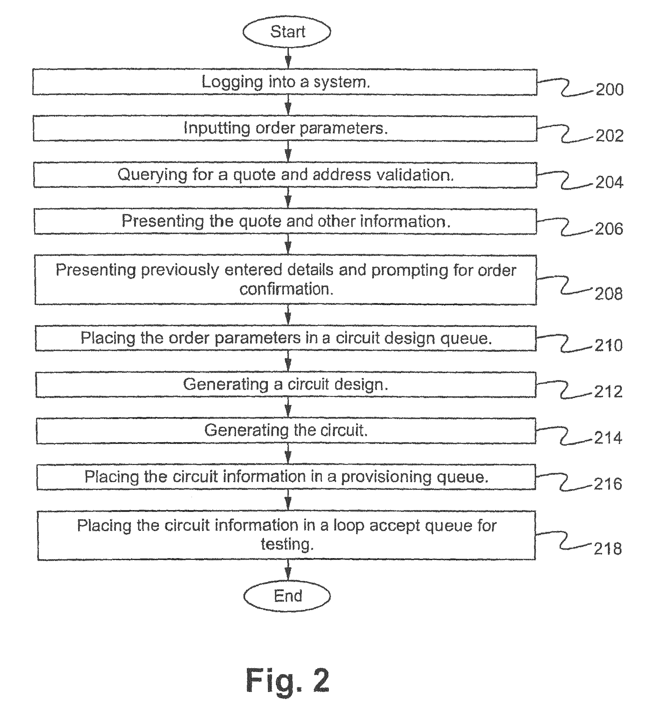

Figure 2 illustrates a flowchart of a method of implementing the integrated access provisioning system according to some embodiments. In the step 200, a user logs into the system. Logging in is able to be implemented in any manner such as entering a username and password. Other examples of logging in include, using Near Field Communications (NFC) to detect a user's phone and acquire user information based on the phone detected, using Bluetooth or infrared, using a Radio Frequency Identification (RFID) reader (e.g., to read a card or chip storing user identification information). In the step 202, the user inputs order parameters. The user is able to input the order parameters in any manner such as filling out an online form, using voice input or any other input implementation. The order parameters are able to include any information such as name, company, address, access information (e.g., type, amount), and/or any other parameters. In the step 204, the system queries for a quote and address validation. The system utilizes one or more databases or other data sources to determine if the address input by the user is correct and to generate a price quote based on the ordering parameters. In the step 206, the user is presented with the quote and other information and the user the option to purchase. If the user chooses not to purchase, then the process ends. In some embodiments, if the user purchases, then the system presents the previously entered details and prompts for confirmation, in the step 208. In the step 210, the order parameters are placed in a circuit design queue. In the step 212, a circuit design is automatically or manually generated. In the step 214, a circuit is automatically or manually generated based on the circuit design. In the step 216, the circuit or circuit information is placed in an ASR provisioning queue for provisioning. The provisioning is able to be performed manually or automatically. In the step 218, the circuit or circuit information is placed in a loop accept queue for testing. Any type of testing is able to be performed to ensure the circuit is valid without detected errors. In some embodiments, additional steps are implemented such as reporting any feedback or automatically revisiting a step based on the result of the testing (e.g., designing and generating a new circuit to overcome detected errors). Additionally, in some embodiments, the step of installing or providing the circuit is implemented. In some embodiments, the order of the steps is modified.

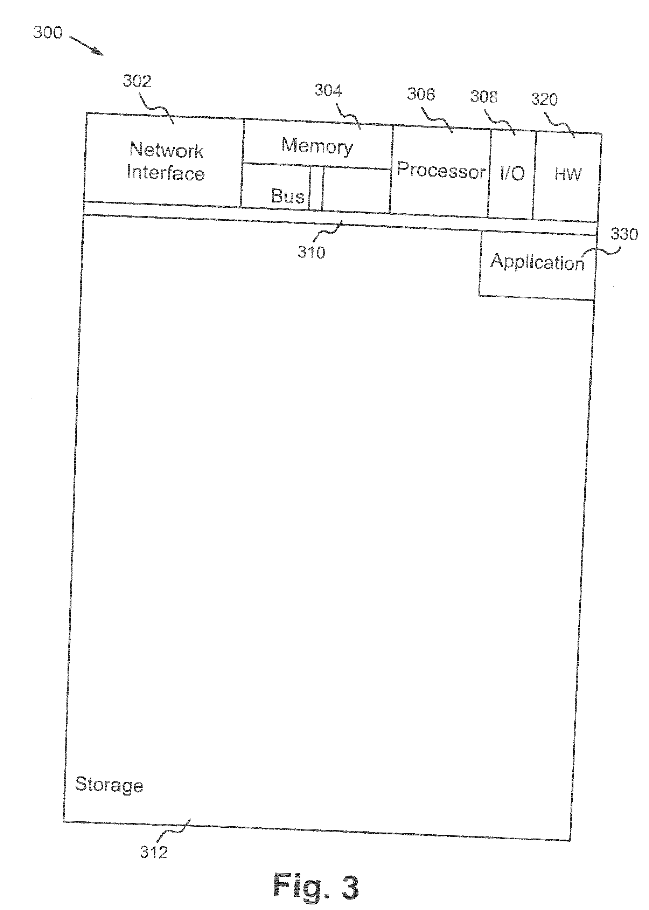

Figure 3 illustrates a block diagram of an exemplary computing device configured to implement the integrated access provisioning system according to some embodiments. The computing device 300 is able to be used to acquire, store, compute, process, communicate and/or display information. For example, a computing device 300 is an old device, a new device, a cloud device or any other device. In general, a hardware structure suitable for implementing the computing device 300 includes a network interface 302, a memory 304, a processor 306, I/O device(s) 308, a bus 310 and a storage device 312. The choice of processor is not critical as long as a suitable processor with sufficient speed is chosen. The memory 304 is able to be any conventional computer memory known in the art. The storage device 312 is able to include a hard drive, CDROM, CDRW, DVD, DVDRW, Blu-Ray®, flash memory card or any other storage device. The computing device 300 is able to include one or more network interfaces 302. An example of a network interface includes a network card connected to an Ethernet or other type of LAN. The I/O device(s) 308 are able to include one or more of the following: keyboard, mouse, monitor, display, printer, modem, touchscreen, button interface and other devices. In some embodiments, the hardware structure includes multiple processors and other hardware to perform parallel processing. Integrated access provisioning system application(s) 330 used to perform the integrated access provisioning method are likely to be stored in the storage device 312 and memory 304 and processed as applications are typically processed. More or fewer components shown in Figure 3 are able to be included in the computing device 300. In some embodiments, integrated access provisioning hardware 320 is included. Although the computing device 300 in Figure 3 includes applications 330 and hardware 320 for implementing the integrated access provisioning method, the integrated access provisioning method is able to be implemented on a computing device in hardware, firmware, software or any combination thereof. For example, in some embodiments, the integrated access provisioning applications 330 are programmed in a memory and executed using a processor. In another example, in some embodiments, the integrated access provisioning hardware 320 is programmed hardware logic including gates specifically designed to implement the method.

In some embodiments, the integrated access provisioning application(s) 330 include several applications and/or modules. In some embodiments, modules include one or more sub-modules as well.

Examples of suitable computing devices include a personal computer, a laptop computer, a computer workstation, a server, a mainframe computer, a handheld computer, a personal digital assistant, a cellular/mobile telephone (e.g. an iPhone®), a smart appliance, a tablet computer (e.g. an iPad®), a smart watch, or any other suitable computing device.

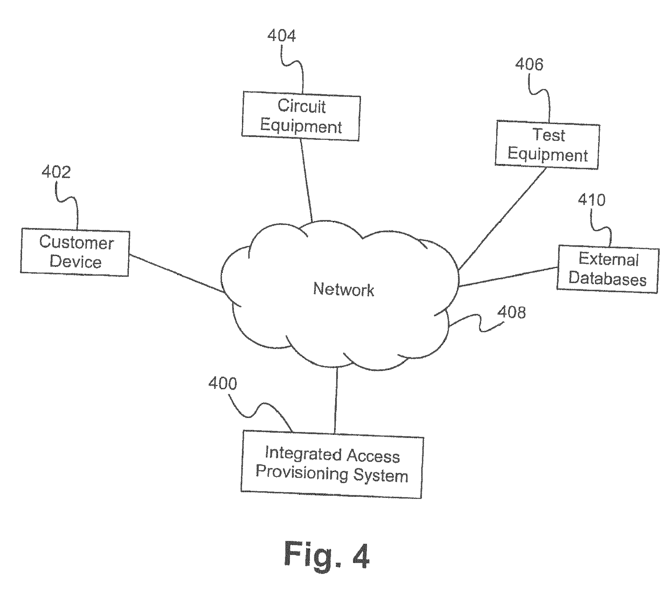

Figure 4 illustrates a network of devices configured to implement the integrated access provisioning system according to some embodiments. The network of devices is able to include any number of devices and any various devices including, but not limited to, an integrated access provisioning system device 400, a customer device 402 (e.g., user's smart phone), circuit design/generation equipment 404 and test equipment 406, coupled through a network 408 (e.g., the Internet). In some embodiments, external databases 410 are included in the network of devices such as price quoting systems and address validation data. The network 408 is able to be any network or networks including, but not limited to, the Internet, an intranet, a LAN/WAN/MAN, wireless, wired, cellular, Ethernet, satellite, a combination of networks, or any other implementation of communicating. The devices are able to communicate with each other through the network 408 or directly to each other. In some embodiments, fewer or additional devices are implemented.

To utilize the integrated access provisioning system, a set of dynamic work queues and functions are embedded in the system or are embedded elsewhere but accessed by the system in an automated fashion (e.g., if a request for a circuit comes in and needs a quote, the quoting mechanism is embedded in the system or accessed through an API to an external system). Then, a quote and a specific NCI code are received. Afterwards, assuming the order is acceptable, the order is forwarded for automated processing or to a designers queue where the designer works on the order, makes all of the assignments, validates the design (e.g., makes sure there is a complete path). Then, the process goes to a provisioner to order the circuit (e.g., from internal supplier or 3^{rd} party supplier). The supplier uses the system to provide status updates (e.g., when will the circuit be installed, when installation was completed). Then, the process goes to the tester queue, to execute bit-error tests (e.g., send binary bits to device to make sure proper responses are received (in some embodiments, the testing is automated)). If the circuit passes the tests, then the project is finished. If not, a message is sent to the designer or provisioner queue with information of issues.

In operation, the integrated access provisioning system provides an integrated and automated approach to ordering, designing, provisioning, testing and accepting of access which improves quality and efficiency.

The present invention has been described in terms of specific embodiments incorporating details to facilitate the understanding of principles of construction and operation of the invention. Such reference herein to specific embodiments and details thereof is not intended to limit the scope of the claims appended hereto. It will be readily apparent to one skilled in the art that other various modifications may be made in the embodiment chosen for illustration without departing from the spirit and scope of the invention as defined by the claims.

## Claims

1. A method programmed in a memory of a device comprising:
a. receiving order parameters;
b. querying for a quote and address validation based on the order parameters;
c. generating a circuit design based on the order parameters;
d. generating a circuit based on the circuit design; and
e. testing the circuit.

2. The method of claim 1 wherein the order parameters are received from a user using a user device to communicate with the device.

3. The method of claim 1 wherein querying for the address validation includes comparing the order parameters with an address database to validate an address specified in the order parameters.

4. The method of claim 1 wherein generating the circuit design is automatically performed by a circuit design device.

5. The method of claim 1 wherein generating the circuit is automatically performed by a circuit generation device.

6. The method of claim 1 further comprising automatically placing circuit information based on generating the circuit in a provisioning queue for provisioning.

7. The method of claim 1 wherein the testing the circuit includes placing circuit information in a loop accept queue for testing.

8. The method of claim 1 further comprising automatically generating reports based on the testing.

9. An apparatus comprising:
a. a non-transitory memory for storing an application, the application for automatically:
i. receiving order parameters;
ii. querying for a quote and address validation based on the order parameters;
iii. generating a circuit design based on the order parameters;
iv. generating a circuit based on the circuit design; and
v. testing the circuit; and
b. a processing component coupled to the memory, the processing component configured for processing the application.

10. The apparatus of claim 9 wherein the order parameters are received from a user using a user device to communicate with the device.

11. The apparatus of claim 9 wherein querying for the address validation includes comparing the order parameters with an address database to validate an address specified in the order parameters.

12. The apparatus of claim 9 wherein generating the circuit design is automatically performed by a circuit design device.

13. The apparatus of claim 9 wherein generating the circuit is automatically performed by a circuit generation device.

14. The apparatus of claim 9 wherein the application is further configured for automatically placing circuit information based on generating the circuit in a provisioning queue for provisioning.

15. The apparatus of claim 9 wherein the testing the circuit includes placing circuit information in a loop accept queue for testing.
